# FASCICULE DE BREVET EUROPEEN

(11) **EP 2 279 406 B1**
(45) Date de publication et mention de la délivrance du brevet: **31.07.2013**
(21) Numéro de dépôt: 09738335.0
(22) Date de dépôt: 14.04.2009
(51) Int. Cl.: G01N 29/02, G01N 29/036

(54) **Dispositif et procédé de détection d'éléments en milieu fluidique par des ondes de lamb**
Vorrichtung und Verfahren zur Erkennung von Elementen in einem Fluidmedium mittels Lambwellen
Apparatus and method for detecting elements in a fluid medium by lamb waves

(30) Priorité: 14.04.2008 FR 0802034
(43) Date de publication de la demande: 02.02.2011
(73) Titulaire: Commissariat à l'Énergie Atomique et aux Énergies Alternatives, 75015 Paris (FR)
(72) Inventeur: DEFAY, Emmanuel, F-38340 Voreppe (FR); AID, Marc, F-38000 Grenoble (FR); LASSAGNE, Pierre-Patrick, F-38450 Saint-Georges-de-Commiers (FR); SARRUT-RIO, Nicolas, F-38180 Seyssins (FR)
(74) Mandataire: Gris, Sébastien
(86) Numéro de dépôt international: PCT/FR2009/000428
(87) Numéro de publication internationale: WO 2009/133301

(56) Documents cités:
- US-A- 5 212 988
- LAURENT T ET AL: "LAMB AND SHEAR-HORIZONTAL WAVE PRODUCTION BY INTERDIGITAL TRANSDUCERS DEPOSITED ON BOTH SIDES OF A PIEZOELECTRIC PLATE" JOURNAL OF THE ACOUSTICAL SOCIETY OF AMERICA, AIP / ACOUSTICAL SOCIETY OF AMERICA, MELVILLE, NY, US, vol. 99, no. 5, 1 mai 1996 (1996-05-01), pages 2876-2882, XP000621084 ISSN: 0001-4966
- LAURENT T ET AL: "Lamb wave and plate mode in ZnO/silicon and AlN/silicon membrane - Application to sensors able to operate in contact with liquid" SENSORS AND ACTUATORS A, ELSEVIER SEQUOIA S.A., LAUSANNE, CH, vol. 87, no. 1-2, 1 décembre 2000 (2000-12-01), pages 26-37, XP004224562 ISSN: 0924-4247 cité dans la demande

## Description

### Domaine technique de l'invention

L'invention est relative à un dispositif de détection d'éléments en milieu fluidique comportant :
- au moins un résonateur acoustique muni d'une surface destinée à la fixation desdits éléments, ledit résonateur comportant des moyens de génération et de mesure d'ondes de Lamb permettant à la fois de générer des ondes de Lamb symétriques et de fournir des signaux représentatifs de la fréquence de résonance du résonateur,
- des moyens électroniques de traitement connectés aux moyens de génération et de mesure du résonateur.

### État de la technique

De manière connue, la détection d'éléments en milieu aqueux peut se faire en utilisant la variation de la fréquence de résonance d'un résonateur acoustique. Une application possible de ces détecteurs est d'observer l'hybridation de molécules sur des récepteurs appropriés. Un dispositif intégré, comportant des détecteurs en parallèle, sur chacun desquels ont été déposés des récepteurs chimiques, peut être immergé pour réaliser un procédé collectif de détection. Ce procédé est un procédé chimique. Lorsque le dispositif est immergé dans plusieurs milieux fluidiques différents, des molécules sont susceptibles de venir s'hybrider aux récepteurs greffés sur chaque résonateur. Si une molécule vient à s'hybrider, celle-ci devient solidaire du résonateur et en modifie la fréquence de résonance. En s'hybridant sur les récepteurs, les éléments affectent la fréquence de résonance du résonateur. Cette modification de fréquence du résonateur peut alors s'observer par détection électrique.

De tels dispositifs utilisent classiquement des ondes acoustiques de surface (SAW). Pour pouvoir fonctionner, les dispositifs SAW doivent présenter une onde acoustique qui ne doit pas perdre d'énergie dans l'eau, en effet une perte d'énergie diminuerait fortement la sensibilité du dispositif. Afin d'éviter une telle perte d'énergie, les ondes acoustiques sont générées de manière à être parallèles à la surface en contact avec le liquide. Les dispositifs à ondes acoustiques de surface sont bien adaptés dans la mesure où il est possible de générer des ondes de cisaillement, qui induisent un déplacement des ondes uniquement dans le plan du résonateur. Cependant, les dispositifs à ondes acoustiques de surface présentent Inconvénient de nécessiter un substrat piézoélectrique or, le silicium utilisé en général pour la microélectronique n'est pas un substrat piézoélectrique. La réalisation de tels dispositifs ne peut donc pas être faite à faible coût par des méthodes classiques de la microélectronique, notamment sur des substrats de 200mm de diamètres.

Une autre possibilité est d'utiliser des ondes dites de Lamb et de faire en sorte que les ondes acoustiques ne puissent pas se propager dans le liquide. L'onde de Lamb est une onde de volume qui peut se propager dans une plaque, c'est-à-dire dans un milieu solide dont l'épaisseur est très faible devant ses dimensions latérales. Il existe deux types d'ondes de Lamb, les ondes de Lamb symétriques et les ondes de Lamb antisymétriques. Seules les ondes de Lamb antisymétriques peuvent être suffisamment lentes pour éviter de générer une onde acoustique dans le liquide.

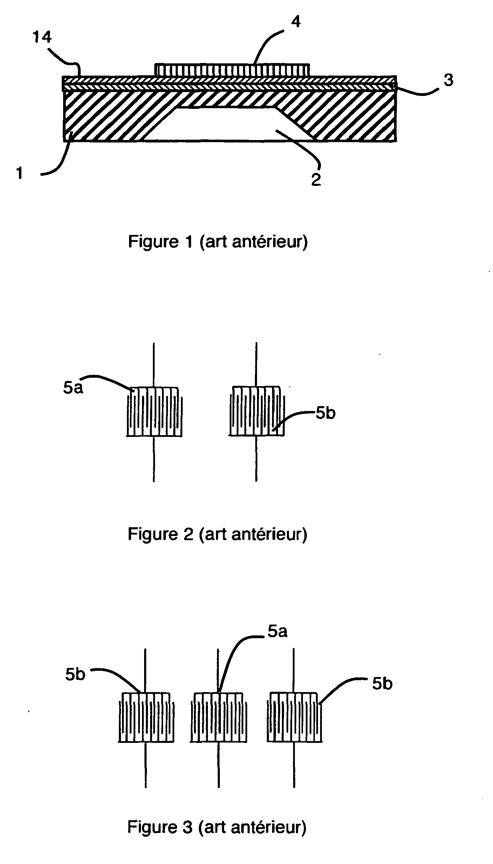

L'article « Lamb wave and plate mode in ZnO/silicon and AIN/Silicon membrane Application to sensor able to operate in contact with Liquid » de T. Laurent, publié dans « Sensors and Actuators » Vol. 87 (2000), p26 à 37, décrit un tel résonateur acoustique utilisé en tant que détecteur de masse en milieu liquide non visqueux utilisant des ondes de Lamb antisymétriques. Comme illustré aux figures 1 à 3, ce dispositif comporte un substrat de silicium 1, dans lequel est formée une cavité 2, recouverte par une membrane 3 en silicium ou en oxyde de silicium (SiO2) et par un plan métallique 14, cet ensemble étant lui-même recouvert par un empilement piézoélectrique 4. L'empilement 4 comporte une couche en matériau piézoélectrique, par exemple en nitrure d'aluminium ou en oxyde de zinc sur laquelle sont déposées des électrodes (non représentées à la figure 1). Le dispositif peut comporter comme illustré à la figure 2, deux ensembles d'électrodes interdigitées, une électrode d'excitation 5a du matériau piézoélectrique et une seconde électrode de contrôle 5b formant une ligne à retard. Dans la variante illustrée à la figure 3, l'électrode d'excitation 5a est disposée entre deux électrodes de contrôle 5b. La mesure du temps de propagation entre l'électrode d'excitation 5a et la ou les électrodes de contrôle 5b représente la vitesse de propagation des ondes acoustiques dans un milieu aqueux.

Cet article illustre l'utilisation des ondes de Lamb antisymétriques dans le but de déterminer une variation de fréquence et remonter ainsi à une mesure de masse. Ainsi, le dispositif comporte au moins un résonateur acoustique muni d'une surface destinée à la fixation desdits éléments. Le résonateur comporte des moyens de génération d'ondes de Lamb, et des électrodes destinées à fournir des signaux représentatifs de la fréquence de résonance du résonateur. Les électrodes de mesures sont reliées à des moyens électroniques de traitement.

Le brevet US 5,212,988 décrit un dispositif utilisant un transducteur couplé à un médium pour générer des ondes de Lamb symétriques et antisymétriques dans le médium. Le transducteur peut être de type un port, c'est à dire qu'il génère et mesure les ondes de Lamb dans le médium. Un tel dispositif n'est pas optimal, l'énergie n'étant pas maximisée dans la structure résonante.

Le document « Lamb and Shear-horizontal wave production by interdigital transducers deposited on both sides of a piezoelectric plate » de T. Laurent et al. p2879-2882 publié dans J. Acoustical Society of America en mai 1996 décrit un dispositif utilisant une ligne de retard, c'est-à-dire un dispositif comportant des électrodes d'excitation d'une part d'une plaque piezoélectrique, et des électrodes de mesure d'autre part de la plaque.

### Objet de l'invention

L'objet de l'invention consiste à réaliser un dispositif de détection d'éléments, facile à réaliser et à utiliser.

Ce but est atteint par le fait que le résonateur acoustique comporte un empilement piézoélectrique délimité par deux faces latérales longitudinales, les moyens de génération et de mesure comportant un nombre impair, supérieur ou égal à trois, d'électrodes supérieures, longitudinales, lesdites électrodes supérieures étant uniformément réparties sur une face supérieure de l'empilement piézoélectrique, chaque face latérale longitudinale de l'empilement piézoélectrique étant alignée avec un bord d'une électrode supérieure associée, deux électrodes supérieures adjacentes ayant une polarité opposée, les électrodes supérieures de même polarité étant électriquement reliées entre elles, au moins une électrode inférieure étant disposée sur une face inférieure de l'empilement piézoélectrique.

Selon un mode de réalisation, le dispositif comporte une unique électrode inférieure à potentiel flottant recouvrant la totalité de la face inférieure de l'empilement piézoélectrique.

Selon un autre mode de réalisation, le dispositif comporte un nombre d'électrodes inférieures égal au nombre d'électrodes supérieures, chaque électrode inférieure étant disposée en regard d'une électrode supérieure. correspondante, deux électrodes inférieures adjacentes ayant une polarité opposée, les électrodes supérieures et inférieures de même polarité étant électriquement reliées entre elles.

Selon une variante, les électrodes supérieures et inférieures en regard ont une même polarité ou une polarité opposée.

L'invention est aussi relative à un procédé de détection d'éléments en milieu fluidique au moyen d'un dispositif de détection, le procédé comporte les étapes successives suivantes :
- la détermination d'une fréquence de résonance étalon correspondant à la génération d'ondes de Lamb symétriques,
- la mise du dispositif dans ledit milieu fluidique,
- la mesure de la fréquence de résonance des ondes de Lamb symétriques, dans le milieu fluidique,
- la détection desdits éléments en fonction de la différence entre la fréquence de résonance en milieu fluidique et la fréquence de résonance étalon.

### Description sommaire des dessins

D'autres avantages et caractéristiques ressortiront plus clairement de la description qui va suivre de modes particuliers de réalisation de l'invention donnés à titre d'exemples non limitatifs et représentés aux dessins annexés, dans lesquels :
Les figures 1 à 3 illustrent des dispositifs selon l'art antérieur.
La figure 4 illustre un dispositif selon l'invention.
Les figures 5 et 6, 8 à 10 illustrent deux modes de réalisation particuliers d'un résonateur selon l'invention.
La figure 7 illustre schématiquement le déplacement des ondes de Lamb symétriques.
Les figures 11, 12 et 14 illustrent différentes implémentations d'un dispositif selon l'invention.
La figure 13 illustre une vue de dessus du dispositif selon l'invention.
La figure 15 illustre une vue en trois dimensions du dispositif de la figure 14.
La figure 16 illustre schématiquement l'hybridation d'éléments sur le résonateur.

### Description des modes préférentiels de réalisation

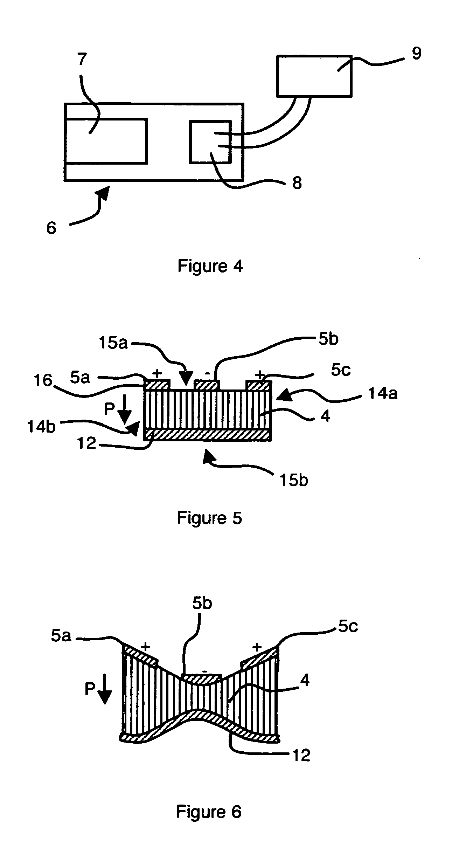

Comme illustré à la figure 4, le dispositif de détection d'éléments en milieu fluidique comporte au moins un résonateur 6 acoustique muni d'une surface 7 destinée à la fixation des éléments pour en détecter leur présence. Le résonateur 6 comporte des moyens de génération et de mesure 8 d'ondes de Lamb permettant à la fois de générer des ondes de Lamb symétriques et de fournir des signaux représentatifs de la fréquence de résonance du résonateur 6. Des moyens électroniques 9 de traitement sont connectés aux moyens de génération et de mesure 8 du résonateur 6, ces moyens électroniques 9 permettent l'interprétation des signaux fournis par les moyens de génération et de mesure.

La notion de résonance est prendre au sens large. En effet, une anti-résonance étant associée à chaque résonance, les moyens électroniques de traitement peuvent interpréter la variation de fréquence de résonance ou d'antirésonance. On entend donc par résonance aussi bien la résonance proprement dite que l'antirésonance.

Pour détecter correctement un élément dans un milieu fluidique, il est important que le dispositif ne génère pas d'ondes acoustiques dans le fluide. En effet, la polarisation acoustique correspond au déplacement d'un point de la surface d'un matériau vertical et/ou horizontal. Ainsi, il faut faire en sorte que la fréquence de résonance du résonateur soit inférieure à la fréquence de déplacement des ondes acoustiques dans le fluide. C'est pour cela que les ondes de Lamb antisymétriques sont largement utilisées. Il est en effet possible d'obtenir des ondes de Lamb antisymétriques à des fréquences très faibles, proche de 0Hz, largement en dessous de la fréquence de déplacement des ondes acoustiques dans le fluide.

La présente invention se base sur l'utilisation des ondes de Lamb symétriques. Bien que ces ondes soient classiquement considérées comme des ondes parasites induisant une onde dans le fluide qui disperse l'énergie acoustique, elles peuvent être, contrairement aux préjugés lorsqu'elles sont exploitées correctement, utilisées pour détecter la présence d'éléments en milieu fluidique. Lorsque les ondes de Lamb symétriques sont utilisées dans un dispositif les favorisant, la polarisation acoustique résultante est quasiment horizontale. Les composantes verticales sont peu présentes évitant ainsi la génération d'ondes acoustiques longitudinales dans le fluide.

Les moyens de génération et de mesure 8 d'ondes de Lamb sont des moyens favorisant la génération d'ondes de Lamb symétriques. Ainsi, lorsque le dispositif est plongé dans un fluide alors que le résonateur 6 est placé à sa fréquence de résonance correspondant à la génération des ondes de Lamb symétriques, les éléments contenus dans le fluide, compatibles avec la surface 7 destinée à la fixation desdits éléments, deviennent solidaires de cette surface 7 entraînant une variation de la fréquence de résonance du résonateur. Pour cela, le résonateur acoustique comporte un empilement piézoélectrique 4 délimité par deux faces latérales longitudinales 14a et 14b et les moyens de génération et de mesure 8 comportent sur une face supérieure de l'empilement piézoélectrique un nombre impair, supérieur ou égal à trois, d'électrodes supérieures longitudinales 5a, 5b, 5c. Les électrodes supérieures 5a, 5b, 5c sont uniformément réparties sur la face supérieure 15a de l'empilement piézoélectrique 4. Chaque face latérale 14a, 14b longitudinale de l'empilement est alignée avec un bord 16 d'une électrode supérieure associée 5a, 5c sur la figure 5. Deux électrodes supérieures adjacentes ont une polarité opposée, les électrodes de même polarité étant électriquement reliées entre elles. Au moins une électrode inférieure est disposée sur une face inférieure de l'empilement piézoélectrique 4. La variation est mesurée par les électrodes supérieures et/ou inférieures puis transmise aux moyens électroniques 9 de traitement pour y être interprétée.

Ainsi, le procédé de détection d'éléments en milieu fluidique au moyen d'un dispositif de détection, tel que décrit dans le présent texte, comporte les étapes successives suivantes :
- la détermination d'une fréquence de résonance étalon correspondant à la génération d'ondes de Lamb symétriques au niveau du résonateur,
- la mise du dispositif dans ledit milieu fluidique dans lequel on souhaite vérifier la présence de certains éléments,
- la mesure de la fréquence de résonance des ondes de Lamb symétriques lorsque le dispositif est placé dans le milieu fluidique,
- la détection desdits éléments en fonction de la différence entre la fréquence de résonance en milieu fluidique et la fréquence de résonance étalon.

La fréquence de résonance du résonateur dans le milieu fluidique est mesurée par les électrodes supérieures et/ou inférieure(s) puis interprétée par les moyens électroniques 9 de traitement. Les moyens électroniques 9 déterminent si la variation entre la fréquence de résonance en milieu fluidique et la fréquence de résonance étalon correspond à la présence de certains éléments dans le fluide.

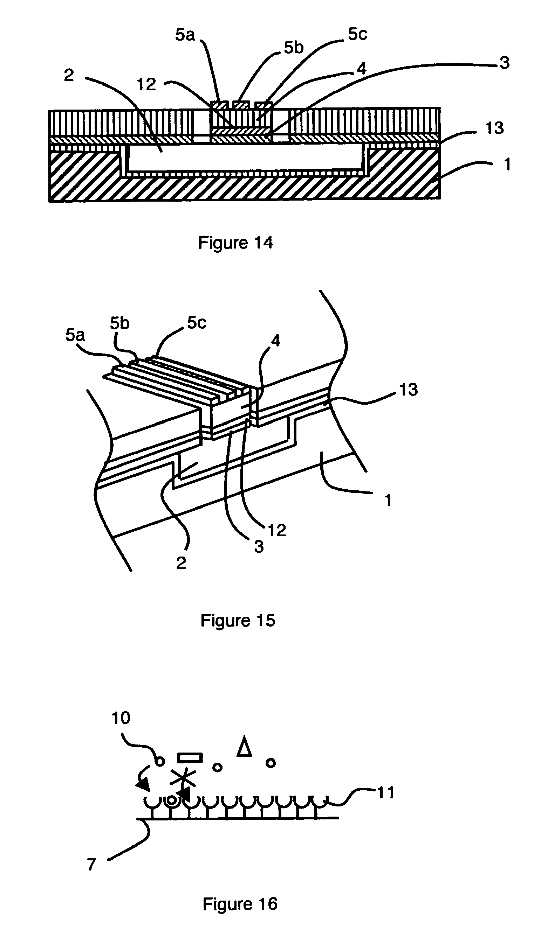

Une couche d'hybridation peut recouvrir une partie ou tout le résonateur de manière à former la surface 7 destinée à la fixation des éléments. Comme illustré à la figure 16, cette couche comporte des récepteurs 11 adaptés à certains éléments 10, ainsi lorsque le résonateur est plongé dans le fluide certains éléments 10 peuvent s'hybrider sur les récepteurs 11, l'hybridation provoque alors une modification de la masse du résonateur induisant une variation de la fréquence de résonance. De préférence, les récepteurs sont formés sur une couche organique recouvrant la surface 7.

Selon un mode de réalisation particulier illustré à la figure 5, le résonateur acoustique générant des ondes de Lamb symétriques comporte un empilement piézoélectrique 4 délimité par deux faces latérales 14a et 14b longitudinales. Les deux faces latérales 14a et 14b peuvent être, comme sur la figure 5, sensiblement parallèles entre elles et de même hauteur de sorte à relier la face supérieure 15a et inférieure 15b de l'empilement piézoélectrique 4. Les moyens de génération et de mesure 8 d'ondes de Lamb du résonateur comportent, de préférence, au moins trois électrodes supérieures 5a, 5b et 5c, sensiblement parallèles et disposées sur la face supérieure 15a de l'empilement piézoélectrique 4. Les électrodes supérieures 5a, 5b, 5c sont longitudinales et sont agencées de sorte que les électrodes 5a et 5c supérieures aient chacune un bord 16 aligné à une face latérale 14a, 14b associée. Ainsi, sur la figure 5 l'interface de chaque face latérale 14a, 14b avec la face supérieure 15a forme une arête au niveau de laquelle est disposée une électrode supérieure 5a, 5c. Une électrode inférieure 12, à potentiel flottant, est disposée sous l'empilement piézoélectrique 4 de sorte que la face inférieure 15b soit totalement recouverte par l'électrode inférieure 12. La disposition uniforme, et donc symétrique, des électrodes supérieures 5a, 5b, 5c par rapport à l'empilement piézoélectrique 4 associée à une électrode 12 à potentiel flottant permet de favoriser la génération d'ondes de Lamb symétriques dans l'empilement piézoélectrique. L'empilement piézoélectrique comporte au moins une couche en matériau piézoélectrique. Sur la figure 5, les électrodes supérieures 5a et 5c ont une même polarité (+) alors que l'électrode supérieure centrale 5b est de polarité opposée (-) à la polarité des électrodes supérieures 5a et 5c.

Les moyens de génération d'ondes de Lamb symétriques peuvent comporter des moyens d'application d'une tension (+/-) entre les électrodes supérieures de polarité opposée. Les électrodes supérieures de même polarité sont électriquement reliées entre elles.

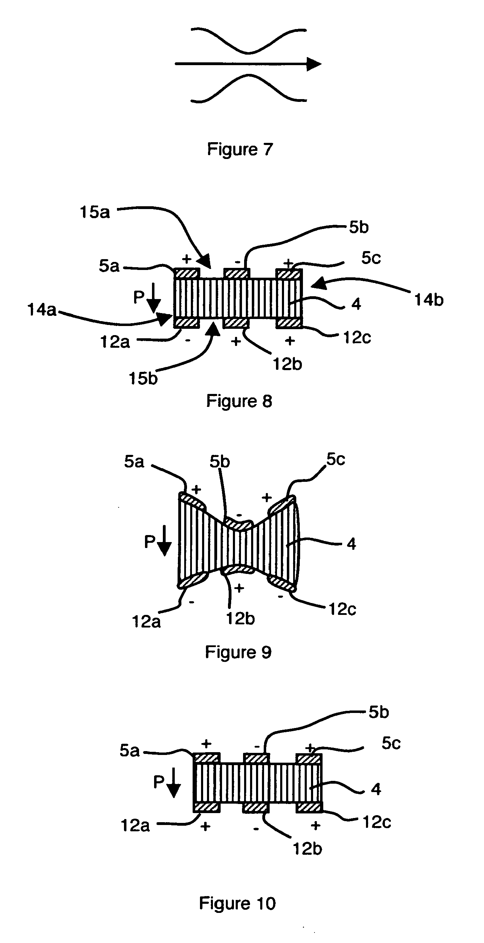

À la figure 6, la structure du résonateur de la figure 5 se déforme selon un profil correspondant sensiblement au profil des ondes de Lamb symétriques (figure 7) par application d'une tension alternative entre les électrodes supérieures 5a/5b et 5b/5c à une fréquence correspondant à la résonance d'un mode de vibration générant des ondes de Lamb symétriques. Cette déformation s'explique par un champ de déformation généré dans l'empilement piézoélectrique 4. Dans les zones où les électrodes supérieures 5a et 5c sont polarisées positivement, avec une polarisation électrique P du matériau piézoélectrique vers le bas, l'épaisseur de l'empilement piézoélectrique 4 augmentera entre les électrode supérieure 5a et 5c et l'électrode à potentiel flottant 12. À l'inverse, dans les zones où une électrode supérieure 5b est polarisée négativement, l'empilement piézoélectrique 4 aura tendance à diminuer son épaisseur.

Bien entendu, le nombre d'électrodes supérieures n'est pas limité à trois, il est possible d'avoir autant d'électrodes que souhaité dès lors que leur nombre est impair et que deux électrodes supérieures adjacentes sont de polarité opposée.

Selon un autre mode de réalisation illustré à la figure 8, les moyens de générations et de mesure d'ondes de Lamb comportent une pluralité d'électrodes inférieures 12a, 12b et 12c chacune étant disposée sur la face inférieure de l'empilement piézoélectrique en regard d'une électrode supérieure 5a, 5b et 5c correspondante, pour former des couples d'électrodes 5a/12a, 5b/12b et 5c/12c. Deux électrodes inférieures adjacentes sont de polarité opposée. Les moyens de génération et de mesure d'ondes de Lamb symétriques comportent alors des moyens pour appliquer une tension entre les électrodes d'un couple d'électrodes 5a/12a, 5b/12b et 5c/12c. De préférence, les électrodes supérieures et inférieures de même polarité sont électriquement reliées entre elles. Sur les figures 8 et 9, afin de favoriser la génération d'ondes de Lamb symétriques, les électrodes supérieures et inférieures en regard ont une polarité opposée. Ainsi, sur la figure 8, les électrodes supérieures 5a et 5c ont une polarité positive (+) et l'électrode supérieure 5b a une polarité négative (-) alors que les électrodes inférieures 12a et 12c ont une polarité négative (-) et l'électrode inférieure 12b a une polarité positive. Il est alors obtenu, sur le même principe que précédemment, une déformation du résonateur (figure 9) dans le cas où l'empilement piézoélectrique 4 a sa polarisation électrique P vers le bas.

Selon une variante illustrée à la figure 10, le dispositif comporte toujours un nombre d'électrodes inférieures 12a, 12b, 12c égal au nombre d'électrodes supérieures 5a, 5b, 5c, chaque électrode inférieure 12a ,12b, 12c étant disposée en regard d'une électrode supérieure 5a, 5b, 5c correspondante. Deux électrodes inférieures adjacentes ont une polarité opposée et les électrodes supérieures et inférieures de même polarité étant électriquement reliées entre elles. Les électrodes supérieures et inférieures en regard ont une même polarité. Ainsi, sur cette figure 10 les électrodes supérieures 5a et 5c et les électrodes inférieures 12a et 12c ont une polarité positive (+) alors que l'électrode supérieure 5b et l'électrode inférieure 12b ont une polarité négative.

Bien entendu, les exemples de polarité donné ci-dessus ne sont pas limitatifs et tout type d'enchaînement peut être réalisé tant que les polarités de deux électrodes adjacentes sont opposées.

De préférence, l'empilement piézoélectrique 4 a une épaisseur d'environ 10nm à 5µm, notamment afin d'assurer une rigidité suffisante à la membrane. À titre d'exemple, on peut choisir un matériau piézoélectrique de type AIN ou Pb(Ze, Ti)O₃ (appelé PZT) ou ZnO. Bien entendu, cette liste n'est pas limitative.

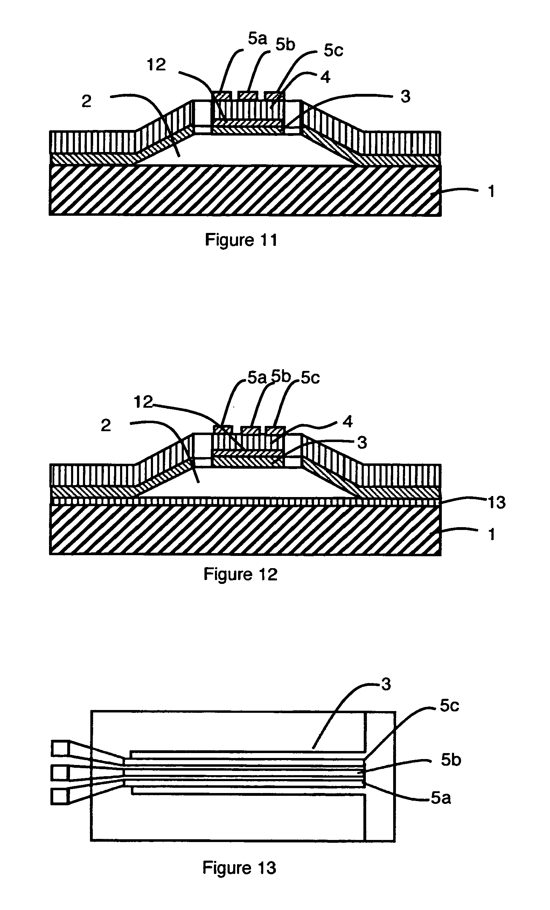

Selon un mode de réalisation particulier illustré aux figures 11 à 13, le dispositif de détection d'éléments en milieu fluidique comporte un substrat 1. Une membrane 3 en forme de doigt, dont une extrémité est ancrée sur le substrat 1, est réalisée au-dessus du substrat 1 de manière à délimiter une cavité 2 entre la membrane 3 et le substrat 1. Préalablement à la libération de la membrane, l'empilement piézoélectrique 4 est formé sur la membrane 3 et comporte au moins une couche en matériau piézoélectrique supportant les électrodes supérieures 5a, 5b, 5c disposées sur l'empilement piézoélectrique 4. La ou les électrodes inférieures (12, 12a, 12b, 12c) sont disposées entre la membrane 3 et l'empilement 4. In fine, la membrane 3 est libérée par la gravure de la couche sacrificielle, formant ainsi la cavité 2.

La membrane 3 peut aussi comporter deux points d'ancrage (non représentés) au substrat de sorte à former un pont dont les deux extrémités sont ancrées au substrat, l'empilement piézoélectrique étant porté par le pont.

Comme illustré à la figure 12, le dispositif peut être obtenu à partir d'un substrat de silicium 1 sur lequel on réalise une oxydation thermique pour former une couche d'oxyde de silicium 13. Cette couche 13 a, de préférence, une épaisseur de 0,5µm. On dépose ensuite un polymère qui sert de couche sacrificielle délimitant ultérieurement la cavité 2 de forme trapézoïdale. Cette couche sacrificielle a, de préférence, une épaisseur de 1,5µm. Une couche de nitrure de silicium destinée à constituer la membrane 3 est ensuite déposée, par exemple par PECVD, sur la couche d'oxyde de silicium 13 et sur la couche sacrificielle. Elle a, de préférence, une épaisseur de 400nm. On réalise ensuite un empilement comportant la ou les électrodes inférieures 12, 12a, 12b, 12c, puis la couche en matériau piézoélectrique formant l'empilement 4, de préférence réalisée en nitrure d'aluminium, et enfin les électrodes supérieures 5a, 5b et 5c. La ou les électrodes inférieures 12 sont réalisées par pulvérisation de platine (Pt), pour former une couche qui peut mesurer une d'épaisseur de 100nm puis cette couche, qui peut de préférence être de 100nm d'épaisseur, est ensuite gravée par usinage ionique pour former la ou les électrodes inférieures avant le dépôt de la couche en matériau piézoélectrique. Une couche de nitrure d'aluminium d'environ 1µm d'épaisseur destinée à former la couche en matériau piézoélectrique, est ensuite pulvérisée sur l'ensemble du dispositif. Une couche d'environ 100nm d'épaisseur, destinée à la formation des électrodes supérieures 5a, 5b, 5c est ensuite réalisée par pulvérisation de platine (Pt) sur la couche de nitrure d'aluminium formant l'empilement piézoélectrique 4. L'empilement est ensuite gravé jusqu'au niveau de la couche sacrificielle de sorte que l'empilement piézoélectrique soit délimité par les deux faces latérales 14a et 14b. Cette gravure de l'empilement est réalisée par gravure ionique de la couche supérieure de platine formant les électrodes supérieures 5a, 5b, 5c, gravure humide pour la couche de nitrure d'aluminium formant l'empilement piézoélectrique 4, et gravure ionique réactive pour la couche de nitrure de silicium formant la membrane 3. Pour terminer, la couche sacrificielle est retirée dans un plasma oxygène pour former une cavité 2. La membrane 3, l'électrode inférieure 12, l'empilement piézoélectrique 4 et les électrodes supérieures 5a, 5b, 5c forment ainsi, dans un plan perpendiculaire aux figures 11 et 12, un doigt au-dessus de la cavité 2 pour former le résonateur comme l'illustre la figure 15.

Dans une variante de réalisation, illustrée à la figure 14, la cavité 2 est formée dans le substrat 1. Celui-ci est, par exemple, gravé avant oxydation afin de former la cavité 2. La couche oxydée 13 est ensuite réalisée et la couche sacrificielle est constituée par un polymère remplissant la cavité 2. La réalisation de la membrane 3, de l'empilement piézoélectrique et la libération de la membrane 3 par retrait de la couche sacrificielle sont ensuite réalisées comme décrit précédemment (figure 15).

Afin d'éviter tout court-circuit ou l'oxydation des électrodes, ces dernières peuvent être recouvertes d'un isolant (non représenté). Ainsi, le dispositif réalisé peut être directement plongé dans le milieu fluidique.

Le dispositif réalisé ne présente pas de variation de la résonance lorsqu'il est mis en présence d'un milieu aqueux. Les ondes acoustiques générées dans le milieu aqueux sont donc négligeables. De plus, le dispositif peut être utilisé directement dans le milieu fluidique, alors que certains dispositifs nécessitent d'abord un trempage de la structure dans le milieu fluidique, une évaporation de l'eau, puis seulement un test électrique. Avec ce nouveau dispositif, le test peut être réalisé directement dans le milieu aqueux, d'où un gain de temps très important.

Il est possible de réaliser sur un même substrat une pluralité de résonateurs. Chaque résonateur peut alors comporter une surface destinée à la fixation d'un type d'éléments différent. Chaque surface est alors munie de récepteurs permettant l'hybridation d'éléments, ainsi lorsque chaque résonateur est placé à sa fréquence de résonance correspondant à la génération d'ondes de Lamb symétriques, le substrat comportant les différents résonateurs peut être plongé dans le fluide et les moyens électroniques de traitement sont capable d'analyser le contenu du fluide en fonction des mesures de la fréquence de résonance de chaque résonateur.

Selon un développement du procédé de détection, la mise du résonateur à sa fréquence de résonance comporte une étape d'étalonnage du dispositif de détection. Ainsi, lors de la détermination de la fréquence étalon, le dispositif est disposé dans l'air ou dans de l'eau. Lorsque le résonateur acoustique comporte un matériau piézoélectrique, l'étalonnage peut être réalisé en faisant varier la fréquence d'excitation des moyens de génération d'ondes de Lamb jusqu'à ce qu'un pic d'impédance soit mesuré au niveau des moyens de génération et de mesure, le pic correspondant alors à la fréquence de résonance à laquelle des ondes de Lamb symétriques sont générées dans le résonateur.

Plus particulièrement, l'utilisation d'un matériau piézoélectrique permet par une excitation électrique d'appliquer une déformation mécanique au matériau, de manière à générer des ondes de Lamb symétriques dans le matériau quand le pic d'impédance est atteint. Ensuite quand le résonateur est plongé dans un fluide, si des éléments s'hybrident avec ce dernier, la déformation du matériau piézoélectrique est modifiée, impliquant alors une variation d'impédance ou de tension aux bornes des moyens de génération et de mesure.

L'utilisation d'un dispositif selon l'invention permet de maximiser l'énergie élastique dans la structure résonante et ainsi d'améliorer la sensibilité du dispositif.

## Revendications

1. Dispositif de détection d'éléments en milieu fluidique comportant :
- au moins un résonateur (6) acoustique muni d'une surface (7) destinée à la fixation desdits éléments, ledit résonateur comportant des moyens de génération et de mesure (8) d'ondes de Lamb permettant à la fois de générer, à la fréquence de résonance du résonateur, des ondes de Lamb symétriques, et de fournir des signaux représentatifs de la fréquence de résonance du résonateur (6),
- des moyens électroniques (9) de traitement connectés aux moyens de génération et de mesure (8) du résonateur (6) et permettant de déterminer la variation de la fréquence de résonance du résonateur représentative de la présence des éléments dans le fluide,
dispositif **caractérisé en ce que** le résonateur (6) acoustique comporte un empilement piézoélectrique (4) délimité par deux faces latérales longitudinales (14a, 14b), les moyens de génération et de mesure (8) comportant un nombre impair, supérieur ou égal à trois, d'électrodes supérieures (5a, 5b, 5c) longitudinales, lesdites électrodes supérieures (5a, 5b, 5c) étant uniformément réparties sur une face supérieure (15a) de l'empilement piézoélectrique (4), chaque face latérale longitudinale (14a, 14b) de l'empilement piézoélectrique (4) étant alignée avec un bord d'une électrode supérieure associée, deux électrodes supérieures (5a, 5b) adjacentes ayant une polarité opposée, les électrodes supérieures (5a, 5b, 5c) de même polarité étant électriquement reliées entre elles, au moins une électrode inférieure (12, 12a, 12b, 12c) étant disposée sur une face inférieure (15b) de l'empilement piézoélectrique (4).

2. Dispositif selon la revendication 1, **caractérisé en ce que** les moyens de génération et de mesure (8) comportent des moyens d'application d'une tension entre les électrodes supérieures de polarité opposée.

3. Dispositif selon l'une des revendications 1 et 2, **caractérisé en ce qu'**il comporte une unique électrode inférieure (12) à potentiel flottant recouvrant la totalité de la face inférieure (15b) de l'empilement piézoélectrique (4).

4. Dispositif selon l'une des revendications 1 et 2, **caractérisé en ce qu'**il comporte un nombre d'électrodes inférieures (12a, 12b, 12c) égal au nombre d'électrodes supérieures (5a, 5b, 5c), chaque électrode inférieure (12a, 12b, 12c) étant disposée en regard d'une électrode supérieure (5a, 5b, 5c) correspondante, deux électrodes inférieures (12a, 12b, 12c) adjacentes ayant une polarité opposée, les électrodes supérieures (5a, 5b, 5c) et inférieures (12a, 12b, 12c) de même polarité étant électriquement reliées entre elles.

5. Dispositif selon la revendication 4, **caractérisé en ce que** les électrodes supérieures (5a, 5b, 5c) et inférieures (12a, 12b, 12c) en regard ont une même polarité.

6. Dispositif selon la revendication 4, **caractérisé en ce que** les électrodes supérieures (5a, 5b, 5c) et inférieures (12a, 12b, 12c) en regard ont une polarité opposée.

7. Dispositif selon l'une quelconque des revendications 1 à 6, **caractérisé en ce que** l'empilement piézoélectrique (4) a une épaisseur comprise entre 10nm et 5µm.

8. Dispositif selon l'une quelconque des revendications 1 à 7, **caractérisé en ce que** des récepteurs (11) à certains éléments (10) sont placés sur la surface (7) du résonateur, la mise du dispositif dans le fluide étant destinée à l'hybridation des éléments (10) correspondants avec les récepteurs (11) pour entraîner une variation de la fréquence de résonance.

9. Procédé de détection d'éléments en milieu fluidique au moyen d'un dispositif de détection selon l'une quelconque des revendications 1 à 8 **caractérisé en ce qu'**il comporte les étapes successives suivantes :
- la détermination d'une fréquence de résonance étalon correspondant à la génération d'ondes de Lamb symétriques,
- la mise du dispositif de détection selon l'une quelconque des revendications 1 à 8 dans ledit milieu fluidique,
- la mesure de la fréquence de résonance des ondes de Lamb symétriques, dans le milieu fluidique,
- la détection desdits éléments en fonction de la différence entre la fréquence de résonance en milieu fluidique et la fréquence de résonance étalon.

10. Procédé selon la revendication 9, **caractérisé en ce que** lors de la détermination de la fréquence étalon, le dispositif est disposé dans l'air ou dans de l'eau.

## Patentansprüche

1. Vorrichtung zur Erfassung von Elementen in einem Fluidmedium mit:
- mindestens einem akustischen Resonator (6), der mit einer zur Festlegung dieser Elemente vorgesehenen Oberfläche (7) versehen ist, wobei der Resonator Einrichtungen zur Erzeugung und Messung (8) von Lambwellen aufweist, die gleichzeitig die Erzeugung der symmetrischen Lambwellen mit der Resonanzfrequenz des Resonators und die Lieferung von Signalen ermöglichen, die die Resonanzfrequenz des Resonators (6) darstellen,
- elektronischen Verarbeitungseinrichtungen (9), die mit den Einrichtungen zur Erzeugung und Messung (8) des Resonators (6) verbunden sind und die Bestimmung der Änderung der Resonanzfrequenz des Resonators ermöglichen, die das Vorliegen der Elementen in dem Fluid darstellt,
**dadurch gekennzeichnet, dass** der akustische Resonator (6) einen piezoelektrischen Stapel (4) umfasst, der von zwei längs verlaufenden Seitenflächen (14a, 14b) begrenzt ist, wobei die Einrichtungen zur Erzeugung und Messung (8) eine ungerade Zahl, welche höher oder gleich drei ist, von längs verlaufenden oberen Elektroden (5a, 5b,
5c) aufweist, wobei die oberen Elektroden (5a, 5b, 5c) gleichmäßig über eine obere Fläche (15a) des piezoelektrischen Stapels (4) verteilt sind, wobei jede längs verlaufende Seitenfläche (14a, 14b) des piezoelektrischen Stapels (4) mit einem Rand einer zugeordneten oberen Elektrode ausgerichtet ist, wobei zwei benachbarte obere Elektroden (5a, 5b) eine entgegengesetzte Polarität aufweisen, wobei die oberen Elektroden (5a, 5b, 5c) mit gleicher Polarität untereinander elektrisch verbunden sind, wobei mindestens eine untere Elektrode (12, 12a, 12b, 12c) auf einer Unterseite (15b) des piezoelektrischen Stapels (4) angeordnet ist.

2. Vorrichtung gemäß Anspruch 1, **dadurch gekennzeichnet, dass** die Einrichtungen zur Erzeugung und Messung (8) Einrichtungen zum Aufbringen einer Spannung zwischen den oberen Elektroden mit entgegengesetzter Polarität aufweisen.

3. Vorrichtung gemäß einem der Ansprüche 1 und 2, **dadurch gekennzeichnet, dass** sie eine einzelne untere Elektrode (12) mit schwankendem Potential umfasst, welche die gesamte Unterseite (15b) des piezoelektrischen Stapels (4) bedeckt.

4. Vorrichtung gemäß einem der Ansprüche 1 und 2, **dadurch gekennzeichnet, dass** sie eine Anzahl an unteren Elektroden (12a, 12b, 12c) umfasst, die der Anzahl der oberen Elektroden (5a, 5b, 5c) entspricht, wobei jede untere Elektrode (12a, 12b, 12c) gegenüber einer entsprechenden oberen Elektrode (5a, 5b, 5c) angeordnet ist, wobei zwei benachbarte untere Elektroden (12a, 12b, 12c) eine entgegengesetzte Polarität aufweisen, wobei die oberen (5a, 5b, 5c) und unteren Elektroden (12a, 12b, 12c) mit gleicher Polarität untereinander elektrisch verbunden sind.

5. Vorrichtung gemäß Anspruch 4, **dadurch gekennzeichnet, dass** die gegenüberliegenden oberen (5a, 5b, 5c) und unteren Elektroden (12a, 12b, 12c) eine gleiche Polarität aufweisen.

6. Vorrichtung gemäß Anspruch 4, **dadurch gekennzeichnet, dass** die gegenüberliegenden oberen (5a, 5b, 5c) und unteren Elektroden (12a, 12b, 12c) eine entgegengesetzte Polarität aufweisen

7. Vorrichtung gemäß einem der Ansprüche 1 bis 6, **dadurch gekennzeichnet, dass** der piezoelektrische Stapel (4) eine Dicke zwischen 10nm und 5µm aufweist.

8. Vorrichtung gemäß einem der Ansprüche 1 bis 7, **dadurch gekennzeichnet, dass** die Empfänger (11) für bestimmte Elemente (10) auf der Oberfläche (7) des Resonators platziert sind, wobei das Einsetzen der Vorrichtung in das Fluid zur Hybridisierung der mit den Empfängern (11) korrespondierenden Elementen (10) vorgesehen ist, um eine Änderung der Resonanzfrequenz herbeizuführen.

9. Verfahren zur Erfassung von Elementen in einem Fluidmedium mit Hilfe einer Erfassungsvorrichtung gemäß einem der Ansprüche 1 bis 8, **dadurch gekennzeichnet, dass** es die folgenden aufeinanderfolgenden Schritte umfasst:
- Bestimmen einer Normalresonanzfrequenz entsprechend der Erzeugung von symmetrischen Lambwellen,
- Einsetzen der Erfassungsvorrichtung gemäß einem der Ansprüche 1 bis 8 in das Fluidmedium,
- Messen der Resonanzfrequenz der symmetrischen Lambwellen in dem Fluidmedium,
- Erfassen dieser Elemente in Abhängigkeit von dem Unterschied zwischen der Resonanzfrequenz in dem Fluidmedium und der Normalresonanzfrequenz.

10. Verfahren gemäß Anspruch 9, **dadurch gekennzeichnet, dass** während der Bestimmung der Normalfrequenz die Vorrichtung in der Luft oder im Wasser angebracht ist.

## Claims

1. Device for detecting elements in a fluid environment comprising:
- at least one acoustic resonator (6) provided with a surface (7) designed for fixing of said elements, said resonator comprising means for generating and measuring (8) Lamb waves enabling both symmetrical Lamb waves to be generated and also signals representative of the resonance frequency of the resonator (6) to be provided,
- electronic processing means (9) connected to said means for generating and measuring (8) of the resonator (6) and enabling to determine the variation of the resonance frequency of the resonator representative of the presence of the elements in the fluid,
device **characterized in that** the acoustic resonator (6) comprises a piezoelectric stack (4) delimited by two longitudinal lateral surfaces (14a, 14b), the means for generating and measuring (8) comprising an odd number of longitudinal upper electrodes (5a, 5b, 5c), greater than or equal to three, said upper electrodes (5a, 5b, 5c) being uniformly distributed on a top surface (15a) of the piezoelectric stack (4), each longitudinal lateral surface (14a, 14b) of the piezoelectric stack (4) being aligned with an edge of an associated upper electrode, two adjacent upper electrodes (5a, 5b) having an opposite polarity, the upper electrodes (5a, 5b, 5c) of the same polarity being electrically connected to one another, at least one lower electrode (12, 12a, 12b, 12c) being arranged on a bottom surface (15b) of the piezoelectric stack (4).

2. Device according to claim 1, **characterized in that** the means for generating and measuring (8) comprise means for applying a voltage between the upper electrodes of opposite polarity.

3. Device according to one of claims 1 and 2, **characterized in that** it comprises a single lower electrode (12) having a floating potential and covering the whole of the bottom surface (15b) of the piezoelectric stack (4).

4. Device according to one of claims 1 and 2, **characterized in that** it comprises a number of lower electrodes (12a, 12b, 12c) equal to the number of upper electrodes (5a, 5b, 5c), each lower electrode (12a, 12b, 12c) being arranged facing a corresponding upper electrode (5a, 5b, 5c), two adjacent lower electrodes (12a, 12b, 12c) having an opposite polarity, the upper electrodes (5a, 5b, 5c) and lower electrodes (12a, 12b, 12c) of the same polarity being electrically connected to one another.

5. Device according to claim 4, **characterized in that** the facing upper electrodes (5a, 5b, 5c) and lower electrodes (12a, 12b, 12c) have the same polarity.

6. Device according to claim 4, **characterized in that** the facing upper electrodes (5a, 5b, 5c) and lower electrodes (12a, 12b, 12c) have an opposite polarity.

7. Device according to any one of claims 1 to 6, **characterized in that** the piezoelectric stack (4) has a thickness comprised between 10nm and 5µm.

8. Device according to any one of claims 1 to 7, **characterized in that** receptors (11) to certain elements (10) are placed on the surface (7) of the resonator, immersion of the device in the fluid being designed to achieve hybridization of the corresponding elements (10) with the receptors (11) to cause a variation of the resonance frequency.

9. Method for detecting elements in a fluid medium by means of a device for detecting according to any one of claims 1 to 8 **characterized in that** it comprises the following successive steps:
- determination of a reference resonance frequency corresponding to generation of symmetrical Lamb waves,
- placing the device for detecting according to any one of claims 1 to 8 in said fluid medium,
- measuring the resonance frequency of the symmetrical Lamb waves in the fluid medium,
- detection of said elements according to the difference between the resonance frequency in the fluid medium and the reference resonance frequency.

10. Method according to claim 9, **characterized in that**, when the reference frequency is determined, the device is placed in air or in water.
